# EUROPEAN PATENT APPLICATION

(11) **EP 2 597 454 A1**
(43) Date of publication of application: **29.05.2013**
(21) Application number: 11809317.8
(22) Date of filing: 18.07.2011
(51) Int. Cl.: G01N 21/17, G01B 11/00

(54) **DEVICE FOR MEASURING THE STATE OF THE ROADWAY**

(30) Priority: 19.07.2010 ES 201031105
(71) Applicant: Universidad Carlos III De Madrid, 28918 Leganés - Madrid (ES)
(72) Inventor: RUIZ LLATA, Marta, E-28918 Leganés (ES); ACEDO GALLARDO, Pablo, E-28918 Leganés (ES)
(74) Representative: ABG Patentes, S.L.
(86) International application number: PCT/ES2011/070529
(87) International publication number: WO 2012/010734

(57) **Abstract**

The present invention relates to a device or sensor that detects the presence of ice, water, snow and other substances on the surface of a roadway, in a local region or zone thereof. Said device comprises two or more laser sources with different wavelengths and optoelectronic and electronic detection means suitable for detecting changes relating to the complex refractive index of a region of the roadway associated with the presence of said substances. The invention comprises the use of signal modulation and demodulation techniques for providing a device with a high level of sensitivity and coverage that is compact and can be used in vehicles.

## Description

### Object of the Invention

The present invention relates to a device or sensor and a method that detects the presence of ice, water, and other substances on the surface of the roadway in a local region or zone thereof.

This information is essential for highway maintenance vehicles to determine the treatment needs thereof (for example, putting salt on highways). Also, the degradation of traction conditions is of interest for highway users, which is especially important in situations where the presence of these elements is not evident to the driver (for example, the presence of black ice).

### Background of the Invention

There are solutions in the state of the art that use sensors inserted in the roadway, which requires an infrastructure on the road. Therefore these solutions are not suitable for being incorporated in vehicles such as automobiles. Furthermore, these sensors are affected by the condition of the pavement, which degrades due to traffic, external phenomena, or natural phenomena.

Other systems in the state of the art detect the presence of substances based on optical techniques. They use systems based on optical properties because they allow detecting the chemical species or substance not only in a qualitative manner but also in a manner that can lead to quantification. The systems found in the state of the art have the following problems.

Some systems have moving mechanical parts in critical optical systems to assure the detection of parameters of the surface of the roadway, such as water or ice.

Those systems which need moving mechanical parts are extremely sensitive to mechanical fatigue and degradation, which has repercussions on the quality of the measurement, and they present problems when incorporated in vehicles due to vibrations, impacts and inertias they must withstand throughout their service life.

Other systems based on measuring optical properties entail measuring under optical alignment conditions which present problems when they are implemented in practice and complicate applying them to vehicles.

These problems are present in those systems which are implemented based on detecting polarized states. There are also other systems based on reflecting light by a single broadband light source, which presents problems because it does not allow adjusting the power for each beam, limiting the detection capacity and also the coverage, and they present optical alignment problems.

Based on the foregoing, there is a need for estimating parameters such as thickness of the layer of ice. Accurate detection which allows accessing additional parameters, such as the thickness of the layer of substances on the roadway and particularly of ice, is therefore desirable.

It is furthermore necessary to increase the effective coverage range in some cases, and for these cases it is necessary to overcome problems relating to the signal-to-noise ratio because the intensity of the detected radiation decreases when the distance to the surface increases. This fact makes it necessary to provide a higher detection power and sensitivity, as well as to enable the ability to estimate the thickness of the layer of the phase of a substance, parameters which allow implementing friction models with the roadway, or a combination thereof.

### Description of the Invention

The object of the invention is to provide a device and a method for detecting a state of the surface of the roadway in a specific verification region.

The term verification region or zone refers to a specific area where the measurement is taken. The state which this verification region is in depends on the presence or absence of a substance in the verification region (such as whether or not there is water, for example), the thermodynamic phase of a substance on the verification region (whether or not there is ice), or the parameters of the layers of substances (thickness of the layer of ice), or a combination thereof. "Condition" also refers to the value of the state of the surface of the roadway. Therefore, the detection of a state condition comprises distinguishing between the presence or absence of a substance in the verification region (such as whether or not there is water, for example), or between two states of a substance (water in liquid phase, ice). The device of the invention allows detecting if said verification region has a state such as the presence of substances (such as water), the presence of substances in a specific phase (water in solid phase, ice, or in liquid phase), by optoelectronic means. Said device is defined by independent claim 1. In a second inventive aspect, a method for detecting a state condition of the surface of the roadway in a specific verification region according to independent claim 11 is provided. Both claims are herein incorporated by reference.

A first inventive aspect comprises a device for providing a measurement based on the properties of the refractive index of the verification region of the roadway associated with a state condition, that is, a condition for distinguishing between two states of this verification region such as the presence of a substance (for example, the presence of water).

The device is formed by at least the following set of components and a set of technical rules according to claim 1. Each of them is described below:

### "a first emitting group"

The first emitting group comprises a set of means which allow providing, for example, highly monochromatic electromagnetic radiation beams, preferably coherent such as a laser beam. The verification region typically has a size similar to the area of the region where the radiation emitted by the emitting group strikes. When it is a laser beam or beams, it would be similar to the area comprised by the point or points of incidence of the laser, which allows establishing a local or localized characterization of the surface of the roadway.

Advantageously, a selection of the state of polarization of the emitted radiation can also be incorporated. This allows selecting that region of the electromagnetic spectrum suitable for detecting this condition.
*"a first laser source emitting a beam with a wavelength* λ*₁ in the operating mode,* where *this first laser source has modulation means modulating the* intensity *at a frequency f₁ in the operating mode; the value of the refractive index of the verification region at wavelength* λ*₁ being indistinguishable when the verification region is in one state condition* or *another;"*

The first laser source is configured to emit a monochromatic beam. This beam is characterized in that the wavelength of said first beam (λ₁) is selected such that the (complex) refractive index of the verification region does not vary at this wavelength when this verification region is in one state condition or another. In other words, the verification of the state condition based on the information of the refractive index at λ₁ is indistinguishable. Therefore, derivative magnitudes such as the reflectivity of the reflected beam in the verification region do not vary according to whether or not said condition about the state is present in the roadway.

This length λ₁ preferably has a value such that the presence of a noticeable proportion of a chemical species or substance in the verification region. In the first state the verification region lacks a noticeable proportion of said substance in the verification region, and more preferably in a thermodynamic phase. In the second state only a noticeable proportion of a chemical species is present, and it is more preferably present in a thermodynamic phase (solid, liquid).

In one example (for detecting liquid water) this range in λ₁ ranges from 650-1800 nm. It is more preferably a near infrared (IR) region, which allows reducing the cost of components.

Based on the foregoing, the intensity of said beam is modulated at a first modulation frequency *f*₁ by modulation means. The modulation can preferably be amplitude and/or phase modulation. The modulation is more preferably carried out by means of an electronic signal (this signal is hereinafter referred to as REF1).
*"a second laser source emitting a beam with a wavelength* λ*₂ in the operating mode,* where *this second laser source has modulation means modulating the* intensity *at a frequency f₂ in the operating mode, where this frequency f₂ is different from the frequency f₁, the value of the refractive index of the verification region at wavelength* λ*₂ being different when the verification region is in one state condition* or *another;"*

The second laser source is configured to emit another monochromatic beam, characterized in that the wavelength of said second beam (X₂) is selected such that the (complex) refractive index of the verification region is different depending on whether or not the verification region complies with the state condition. In other words, the verification of the state condition of the verification region is possible based on the information of the refractive index at λ_{2.} In other words, the derivative magnitudes such as the reflectivity or the intensity of the reflected beam in the verification region vary according to whether or not said condition about the state is present in the roadway.

This length λ₂ preferably has a value such that distinguishing the presence of a noticeable proportion of a chemical species or substance in the verification region, and more preferably in a thermodynamic phase (e.g. solid or liquid), is possible.

In one example (liquid water), this region is 650-1800 nm. In another example (ice), this region is 650-1800 nm. Any of the preceding ranges is more preferably a near infrared (IR) region, which allows reducing the cost of the components.

Based on the foregoing, the intensity of said beam is modulated at a second modulation frequency *f₂* by modulation means. The modulation can preferably be amplitude and/or phase modulation. The modulation is more preferably carried out by means of an electronic signal (this signal is hereinafter referred to as REF2).

The modulation frequencies *f*₁ and *f*₂ are different and are chosen in a much smaller band than the frequency of the monochromatic beams. The modulation frequencies *f*₁ and *f*₂ of each of the sources are preferably chosen at a frequency not contaminated by the environmental electromagnetic spectrum.
*"a second receiving group in turn comprising:*
*photodetector means intended for receiving the reflected radiation coming from the first and second laser source after striking the verification region and comprising an output of the electrical signal;"*

The receiving group comprises photodetector means providing an electrical signal. This signal contains information about the intensity reflected by the verification region of the roadway at the wavelengths λ₁ and λ₂.

The photodetector means preferably comprise a photodiode.
"a *first demodulation chain supplied by the output of the electrical signal of the photodetector means and provided with an output of the demodulation signal A₁;*
*a second demodulation chain also supplied by the output of the electrical signal of the photodetector means and provided with an output of the demodulation signal A₂;"*

The device has at least two demodulation chains supplied by the electrical signal of the photodetector means performing transduction in a general manner.

The first demodulation chain has electronic means suitable for providing means of demodulation of the signal of the photodetector means at the frequency *f*₁.

The first demodulation chain is preferably supplied (synchronized with) by the signal REF1, although other implementations of the demodulator are included in other embodiments (e.g. a phase-locked loop or PLL).

The same applies for the second demodulation chain. When implementing the demodulator, the latter also has electronic means suitable for providing the demodulation of the signal of the photodetector means at the frequency *f*₂.

In turn, the second demodulation chain is preferably supplied (synchronized with) by the signal REF2, other implementations of the demodulator being included in other embodiments (e.g. PLL).

These demodulation chains are preferably connected in parallel with respect to the electric output of the photodetector means.

The output of the demodulation chains provides a complex amplitude (modulus and phase, quadrature) designated as *A*₁ and *A*₂.
"where *the first and second laser sources of the first emitting group are oriented such that the radiation of the two laser beams strikes the verification region, and at least part of the reflected radiation strikes the photodetector means of the second receiving group in the operating mode;"*

Providing this feature makes both beams use the same detector after striking the same area, i.e., the verification region. Various implementations can be carried out.

In a first implementation, the spatial configuration or location of the first emitting group and of the second emitting group is such that the radiation of the two laser beams (either the two beams or the combined beam having a component of each of the beams) strike the same region (the verification region) and are reflected on the photodetector means.

Other embodiments include guiding means (e.g. optical fiber) which allow guiding the beams from the sources to an emitting point, as well as orientation of the beams. They also allow guiding the reflected beam from a point in space in the photodetector means.
*"and where the device additionally comprises a measuring module which assesses the magnitudes A₂ and A₁ in the operating mode and compares their ratios with at least one set of values that reflect the variation of the refractive index in response* to *a local state condition of the roadway."*

The measuring module is suitable for assessing and comparing the two complex amplitudes *A*₁, *A*₂. These complex amplitudes *A*₁, *A₂* respectively contain information about at least the amplitude component of the intensity of the reflected beams at each wavelength λ₁, λ₂. These chains are therefore suitable for measuring or recording these amplitudes for extracting information about the refractive index from these complex amplitudes and allowing the implementation and adaptation of the module for verification of the local state condition of the roadway.

A processing unit is suitable for dividing the modulus of *A₂* by *A*₁, and comparing it with at least one reference value. When the relationship of *A*₂, *A*₁, preferably the ratio thereof, is compared with a reference value referred to as RREF, preferably chosen based on statistical criteria about a threshold of the state condition of the roadway, a device capable of detecting said state condition is provided.

Preferably, models which allow inferring other parameters of the verification region, such as the thickness of the layer of chemical species or substances such as ice, which can be incorporated together with other information in a friction model can also be implemented based on the detected parameters. In a second inventive aspect, a detection method for detecting a state condition of the surface of the roadway is provided, which allows carrying out the following steps in a specific or chosen verification region:
*"Providing a first beam with a wavelength λ₁, wherein the value of the refractive index of the veri fication region at wavelength* λ*₁ is indistinguishable when the verification region is in one state condition or another, the intensity I₁ of this first beam being modulated at a frequency f₁;*
*and a second beam with a wavelength* λ*₂*, *wherein the value of the refractive index of the verification region at wavelength* λ*₂ is different when the veri fication region is in one state condition* or *another, the intensity I₂ of this second beam being modulated at a frequency f₂ different from the frequency f₁; and the radiation of both beams striking the verification region;"*

A first beam is provided with a wavelength λ₁, and the intensity of which is modulated at a frequency *f*₁, and a second beam is provided with a wavelength λ₂ and intensity modulated at a frequency *f*₂. These beams strike a verification region.

These beams can preferably be combined in a single beam which contains both components.

At least one is preferably a laser beam.

As in the first inventive aspect, the verification region typically has a size similar to the area of the region where the electromagnetic radiation emitted by the emitting group strikes. When it is a laser beam or beams, the spot would be similar to the area comprised by the point or points of incidence of the laser, which allows establishing a local or localized characterization of the surface of the roadway.

The wavelengths of the first and second beam (λ₁, λ₂) have been selected for two values. The first value of the wavelength is such that the (complex) refractive index of the verification region does not vary when this verification region is in one state condition or another. The second value of the wavelength is such that the (complex) refractive index of the verification region is different depending on whether or not the verification region complies with the state condition.
*"detecting the reflected electromagnetic radiation in the verification region, comprising a component of wavelength λ₁ and a component of wavelength* λ*₂*, *by means of photodetector means transforming this reflected electromagnetic radiation into an electrical signal S₁;*

The detection of the reflected beam by photodetector means transforming (transducing) the electromagnetic radiation reflected by the first and the second beam in the verification region into an electrical signal *S*₁. This radiation comprises a component of wavelength λ₁ and a component of wavelength λ₂. Each of these components at λ₁, λ₂ contains the reflected radiation of the first beam with a wavelength λ₁ and of the second beam with a wavelength λ₂, striking the verification region and modulated at the frequencies *f*₁ and *f*₂.

These photodetector means preferably comprise a photodiode.

The use of various electrical signal demodulation techniques is thus enabled with respect to said electrical signal *S*₁. This allows transporting information associated with the refractive index of the verification region at each of the wavelengths λ₁, λ₂ in a versatile and simple manner.
*"demodulating the electrical signal S₁ at frequencies f₁ and f₂ providing the values of a first complex amplitude A₁ at a frequency f₁ and of a second complex amplitude A₂ at a frequency f₂;"*

The electrical signal *S*₁ provided by the photodetector means is demodulated in the range of frequencies of interest. This range includes *f*₁ and *f*₂. First and second demodulation chains are preferably used, and they are more preferably synchronous demodulation chains.

A complex amplitude demodulated at *f*₁ and a complex amplitude demodulated at *f*₂ (amplitudes *A*₁, *A*₂, respectively), which are related to the intensity of the reflected beam at the wavelengths λ₁, λ₂, respectively, maintaining for example a factor of proportionality, are therefore provided.

This signal is the result of high sensitivity to eliminating those components at frequencies that do not coincide with modulation frequencies *f*₁ and *f₂* by means of the use of signal demodulation. Therefore, this manner of obtaining the complex amplitude at each wavelength λ₁, λ₂ enables detecting variations of amplitude when the signal-to-noise ratio is low.

A value for each complex component of the amplitude is preferably obtained: *X*₁ and its quadrature *Y*₁ for *A*₁; *X*₂ and its quadrature *Y*₂ for *A*₂ are compared with a reference.
*"comparing these values of the complex amplitude A₁, A₂ with at least one complex amplitude reference value reflecting the variation of the refractive index at wavelength* λ*₂ when the verification region is in said state condition."*

*Once* these *demodulated values of complex amplitude A₁ at frequency f₁ and of a second complex amplitude A₂ at frequency f₂ are obtained, they are compared with a reference* to *obtain the state condition.*

*Given that the complex amplitudes A₁, A₂ respectively contain information about at least the amplitude component of the* intensity *of the reflected beams at each wavelength* λ*₁,* λ*₂ when comparing* these *values of complex amplitude A₁, A₂ with reference values,* it *is possible* to *establish the state condition that the verification region of the surface of the roadway has.*

*These obtained reference values are preferably chosen based on statistical criteria about a threshold of the state condition of the roadway.*

*It is more preferably a threshold value RREF for comparing with the ratio of A₂ and A₁.*

*These chains are therefore suitable for measuring* or *recording these amplitudes for extracting information about the refractive index from these complex amplitudes and allowing the implementation and adaptation of the module for verification of the local state condition of the roadway.*

*A processing unit is suitable for dividing the modulus of A₂ by A₁, and comparing it with a reference value. When the ratio of A₁, A₂ is compared with a reference value referred* to *as RREF, preferably chosen based on statistical criteria about a threshold of the state condition of the roadway, a device capable of detecting said state condition is provided.*

An autonomous detection device is therefore provided which can be implemented on moving objects and especially on vehicles, which as a result of the minimization of the optical parts in the device, continues to enable the adoption of criteria based on optical properties providing high discriminatory power capable of detecting substances without the problems associated with the presence of moving mechanical parts, optical alignment, with high sensitivity that allows increasing the effective range of distances without degradation of the sensitivity.

### Description of the Drawings

These and other features and advantages of the invention will be more clearly understood from the following detailed description of a preferred embodiment given solely by way of illustrative and non-limiting example, in reference to the attached drawings.
Figure 1 shows a block diagram of an embodiment of the device of the invention.
Figure 2 shows a block diagram of an embodiment of a first group of the device of the invention.
Figure 3 shows a block diagram of an embodiment of other emitting and receiving groups comprised in the device of the invention.
Figure 4 shows a block diagram of an embodiment of the groups of the invention.

### Detailed Description of the Invention

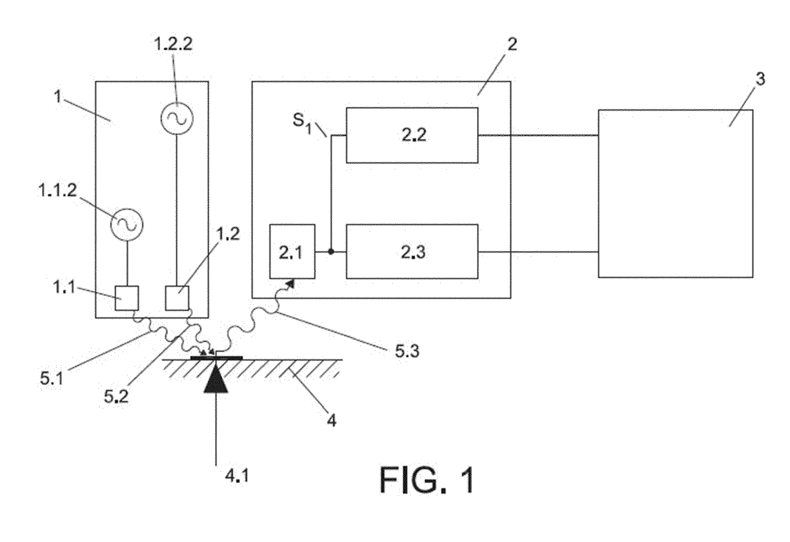

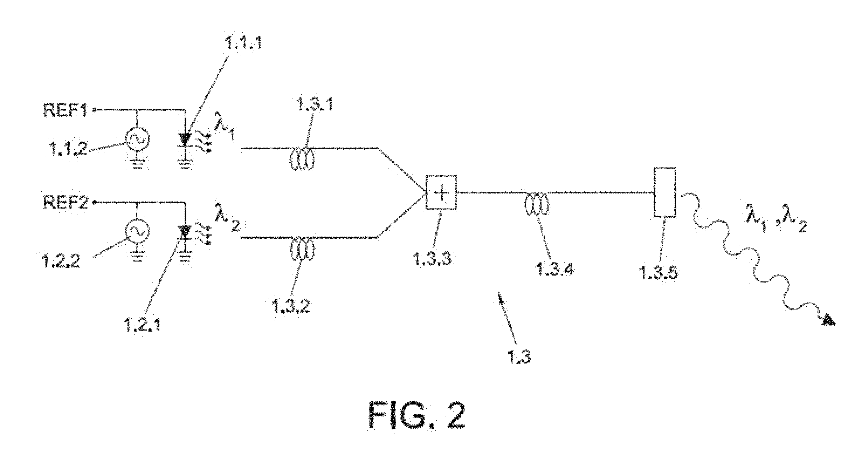

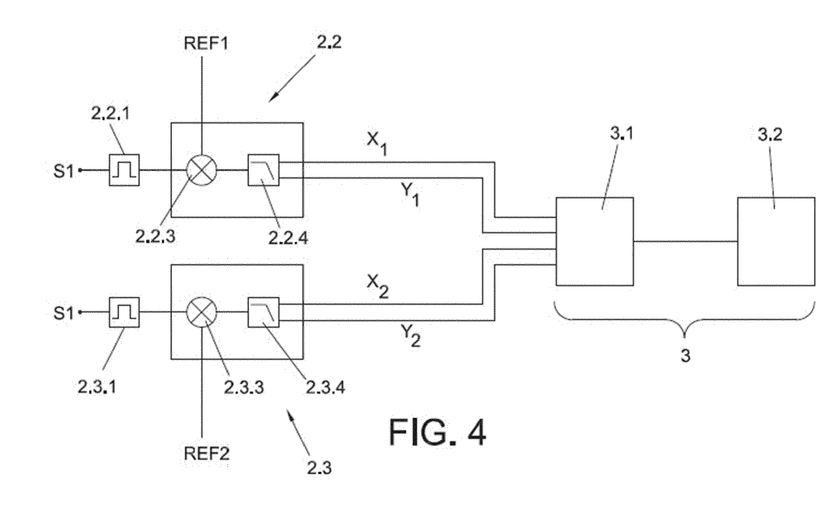

The present invention comprises a device and a method for detecting the verification of a condition of the surface of the roadway 4 a detailed embodiment of which is described below. Figure 1 shows a schematic diagram of the device and Figures 2 to 4 show schemes of one and the same embodiment which will be used to describe various solutions used where the internal structure thereof will be more clearly perceived.

The device according to the embodiment comprises three sets of elements associated with an emitting group 1, a receiving group 2 and a control and processing group 3.

The emitting group 1 comprises a first laser source 1.1 and a second laser source 1.2 as shown in Figure 1. The intensity *I*₁, *I*₂ of each laser beam 5.1, 5.2 is modulated by means of two oscillators 1.1.2, 1.2.2 and is detected by means of a receiving group 2 after striking the verification region 4.1 located in the roadway 4.

The receiving group 2 comprises photodetector means 2.1. These means convert the reflected radiation 5.3 into an electrical signal *S*₁. This signal is introduced in two demodulation chains 2.2, 2.3.

A third control and processing group 3 allows recording and processing the complex amplitudes *A*₁, *A₂* detected by the two demodulation chains 2.2, 2.3.

In the example of the present embodiment, both the laser sources 1.1, 1.2 and the photodetector means 2.1 are located in one and the same support, which simplifies the constructive design.

As a particular manner of carrying out the invention, the embodiment uses a composite configuration in which the demodulation chains 2.1, 2.2 adopt a synchronous demodulation chain form which allows detecting signals in which the signal-to-noise ratio is low. Nevertheless, the term demodulation chain must be interpreted in a broad manner because this implementation is not unique and is possible by means of other implementations, such as a PLL, etc.

These laser beams are reflected on a verification region 4.1 where the lasers strike. In the example of the present embodiment, the spot of each laser 5.1, 5.2 is the same: one and the same spot in the verification region 4.1, which increases the evaluation of the local contribution to the measurement.

In the embodiment, the emitting group 1 has a first semiconductor laser emitter, in this example a first emitting diode 1.1.1, which emits a laser radiation at a wavelength λ₁. This provides a simpler emitter that reduces costs.

More specifically, in this example a configuration for detecting the presence of water in liquid state in the verification region 4.1 of the roadway is described. In this case, the wavelength is preferably 1310 nm (near IR) in which the absorption coefficients determined by the (complex) refractive index of the water in liquid phase does not present variations depending on whether or not water is present in the verification region 4.1. The radiation of the component of the beam at λ₁ is therefore constant and regardless of if the state condition is verified on the verification region 4.1.

An oscillator 1.1.2 supplies a reference signal REF1 to this first emitting diode 1.1.1. The intensity of the radiation 5.1 emitted by this first emitting diode 1.1.1 is therefore modulated by the reference signal REF1. This modulation of the intensity *I*₁ is preferably amplitude modulation (it could be a phase modulation, amplitude modulation or a combination thereof) and at a frequency *f*₁. This enables the use of demodulation techniques for detecting the reflected intensity.

A second semiconductor laser emitter, in this example a second emitting diode 1.2.1, emits a laser radiation at a wavelength λ₂. In this case, the wavelength λ₂ is preferably 1550 nm (near IR) in which the absorption coefficients determined by the (complex) refractive index of the water in liquid phase have variations when water is present in the verification region 4.1. The reflected radiation therefore includes a different component at λ₂ when water is present in liquid phase in the verification region 4.1.

An oscillator 1.2.2 supplies a reference signal REF1 to this second emitting diode 1.2.1. The intensity of the radiation 5.2 emitted by this second emitting diode 1.2.1 is therefore modulated by the reference signal REF2. The intensity *I*₂ is preferably modulated in amplitude (it could be modified in phase and/or amplitude) and at a frequency *f*₂, different from *f*₁, to allow simultaneous demodulation and a better signal-to-noise ratio.

More typically, these frequencies *f*₁, *f*₂ preferably fall within the range of low frequency applications (more preferably, frequencies less than 200 kHz) and chosen in a non-contaminated band, preferably preventing harmonics that are multiples of the frequency of the power supply network (typically, 50 Hz: 50 Hz, 100 Hz, 150 Hz, etc. or 60 Hz: 60 Hz, 120 Hz, 180 Hz, etc.). This prevents contamination by signals at different frequencies and improves the signal-to-noise ratio.

In this example, the light from each of these emitting diodes 1.1.1, 1.2.1 is collected by first guiding means 1.3. These first guiding means 1.3 are preferably a set of dielectric guiding means, such as optical fiber. This embodiment has been carried out by means of two optical fibers referred to as pigtail 1.3.1, 1.3.2 which collect the emission from each of the emitting diodes 1.1.1., 1.2.1. These beams 5.1, 5.2 are combined in the common optical fiber 1.3.4 by means of a combiner 1.3.3. This allows guiding and orienting both beams at the same time to the most favorable emitting point in the construction of the device and facilitates the orientation of the beam so that the laser spot is in the verification region 4.1.

In this example, a collimator 1.3.5 located at the end of the common optical fiber 1.3.4 allows obtaining a collimated beam (collinear rays) striking the verification region 4.1 and it allows obtaining a more compact emitter.

A solution in which the angle of incidence makes a beam emitted in a direction very close to the normal direction of incidence on the surface of the roadway 4 is advantageously adopted, which allows placing the photodetector means 2.1 close to the collimator 1.3.5.

It is therefore possible to achieve a compact emitting group 1 for emitting a beam with two wavelengths λ₁, λ₂ modulated at *f*₁, *f*₂, which is collimated, compact, simple and capable of being oriented with a defined direction.

Once this beam strikes the verification region 4.1 of the roadway, it is reflected and strikes the receiving group 2. In this example, the receiving group 2 comprises photodetector means 2.1. These photodetector means 2.1 comprise a series of parts in this example, such as a focusing lens 2.1.1.

They further comprise a second optical fiber 2.1.2 which conducts a significant part of the reflected radiation, focused by the focusing lens 2.1.1, to a photodiode 2.1.3 that converts this reflected radiation into an electrical signal. This signal is amplified by a preamplifier 2.1.4 to provide an electrical signal *S*₁. This allows a simplified detection, enabling various constructive solutions.

The photodetector means 2.1 can more preferably contain elements such as polarizers for discriminating the state of polarization of the reflected light.

The demodulation chains 2.2, 2.3 can be implemented in various manners. Examples of demodulation chains 2.2 2.3 numerically implemented by means of an analog-to-digital converter, anti-aliasing filter and a logic device, such as a combination of DSP, microprocessor, microcontroller, DPS, FPGA, or another logic device suitable for detecting the phase-amplitude of the signal of the photodetector means at a demodulation frequency are particularly included. This allows a flexible, modular and inexpensive digital implementation.

The present example describes two synchronous demodulation chains 2.2, 2.3 connected in parallel with the output of the preamplifier 2.1.4. In reference to the first chain 2.2, the signal *S*₁ is passed through a band-pass filter 2.2.1 including *f*₁ to improve the signal-to-noise ratio. This signal is introduced in a mixer 2.1.3 where it is multiplied by the reference signal REF1 of the modulation oscillator 1.1.2 at frequency *f*₁. A low-pass filter 2.2.4 is placed at the output of the mixer 2.1.3, which allows obtaining the complex amplitude *A*₁ by means of the signal *X*₁ and its quadrature *Y*₁. The modulus of the complex amplitude is |*A*₁|²= *X*₁²+*Y*₁², and the phase is φ₁=atan (*Y*₁/*X*₁).

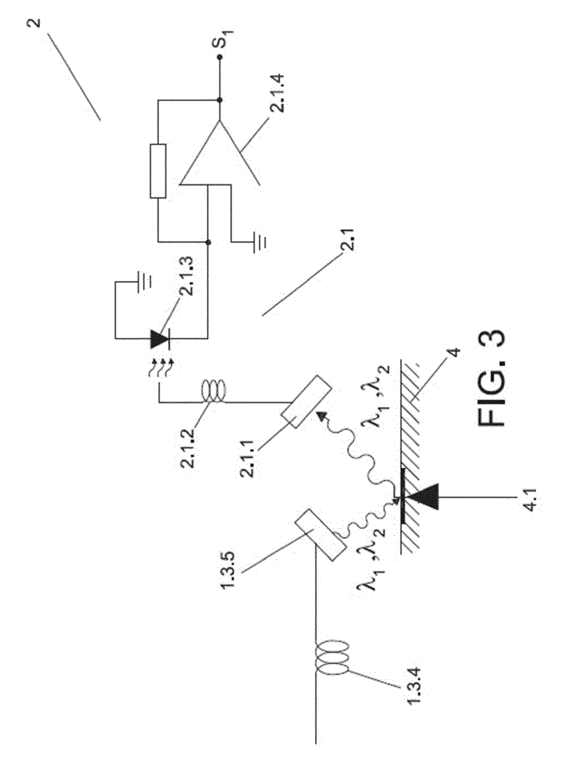

The second demodulation chain 2.3 depicted in Figure 3 has analog components (band-pass filter 2.3.1 including *f*₂, signal mixer 2.2.3 and low-pass filter 2.2.4). The sync signal REF2 at frequency *f₂* is from the second oscillator 1.2.2. The signal *X*₂ and its quadrature, relating to the complex amplitude *A*₂: |*A*₂|²= *X*₂²+*Y*₂², and the phase φ₂=atan (*Y*₂/*X*₂), is provided at the output of the demodulator.

The signal at the output of each demodulator represents the reflected amplitude at λ₁, λ₂ showing excellent immunity with respect to the noise present due to environmental factors. Phase detection allows increasing the coverage range between the emitting point of the laser beam, simplifies the construction and allows taking those sensitive and critical parts of the detection system to zones that can implement electromagnetic compatibility techniques (e.g. shielding) with greater simplicity.

The inputs of an analog-to-digital converter ADC 3.1 are connected to the outputs of the demodulation chains 2.3, 2.4 to receive the signals X₁, Y₁, X₂, Y₂. These signals are therefore introduced in this example in the control and processing group 3 where they are digitized for processing by any processing unit 3.2, such as a microprocessor, a PC, etc. This allows providing flexibility of and implementing various detection strategies.

A processing unit 3.2 is particularly suitable for, by using the digitized signals *X*₁, *Y*₁, *X*₂, *Y*₂, calculating and comparing the modulus of the ratio of these amplitudes |*A*₂|/|*A*₁| with a reference value RREF. In this example, this reference value is a discrimination threshold for discriminating between two states. It can be obtained by means of statistical methods and reflects a criterion for discriminating if the state condition when the |*A*₂|/|*A*₁| ratio is greater or less than the RREF is verified. Therefore, if the |*A*₂|/|*A*₁| ratio is greater than the RREF, it is considered that the surface of the roadway is in a first state. If the |*A*₂|/|*A*₁| ratio is less than the RREF, it is considered that the surface of the roadway is in a second state.

This criterion can be completed based on the information provided by the phases φ₂, φ₁ and a validation criterion is implemented on said information because they provide additional information criterion about the distance at which the target is located and this allows validating the measurement as being correct because both wavelengths are measuring a surface that is located at the same distance. It is further possible to incorporate a power control system (not depicted). This control system would have an input for each signal of *A*₁ as *A₂* is also connected to this system. This system is an electronic circuit suitable for modifying the amplitude of the modulation of each of the modulation sources 1.1.2, 1.2.2. Although it can be implemented on any of the amplitudes *A*₁, *A*₂, it is described for amplitude *A*₂. This power control system is suitable for comparing the modulus of *A*₁ with a reference value P₁ and comprises a control system (such as an integral (I), proportional-integral (PI), proportional-integral-differential (PID) control) which allows being adapted to adjust the amplitude of the signal supplied to the first diode emitter 1.1.1 until |*A*₁| is equal to P₁. It is possible to implement the power control system on any demodulation chain described in this application.

In another example, it is possible to add a plurality of laser sources at a wavelength λ₃,..., λₙ, respectively modulated at frequencies *f*₃, *f*₄,..., *f*ₙ, and the corresponding additional demodulation chains.

It is possible to choose these wavelengths λ₃,..., λₙ for detecting new parameters that allow acquiring information relating to the variation of the complex refractive index with the wavelength which determine an additional state condition of the verification region 4.1 of the surface of the roadway 4.

Another embodiment describes how to add a third source (not shown in the drawings) to the first emitting group. It is based on the embodiment described above, which allows detecting the presence of liquid water in the verification region 4.1. In this case, the relative variation of the absorption coefficients of water (liquid) and ice depending on the wavelength are similar at 1310 nm and different at 1470 nm and 1550 nm. When this condition is met, the complex refractive index or one of the magnitudes derived from it, such as the absorption coefficient, is different at these latter wavelengths (1470 nm, 1550 nm).

Therefore, an emitting group 1 is advantageously provided according to any example of the preceding embodiment, and a third laser source is provided. This third laser source emits a third beam with a wavelength λ_{3.} In this case, wavelength λ₃ is preferably 1470 nm (near IR), in which the absorption coefficients determined by the (complex) refractive index of the water in liquid phase and in solid phase (ice) have variations depending on whether or not water or ice is present in the verification region 4.1.

A third oscillator supplies a reference signal REF3 to this third emitting diode. The intensity of the radiation emitted by this third emitting diode is therefore modulated by the reference signal REF3. This modulation of the intensity *I*₃ is preferably amplitude modulation (it could be phase modulation, amplitude modulation or a combination of both) and at a frequency *f*₃. This enables the use of demodulation techniques for detecting the reflected intensity.

A third laser source advantageously has modulation means modulating the intensity at a frequency *f*₃, different from the frequencies *f*₁ and *f*₂ of the first and second laser sources.

The third laser beam is oriented such that it strikes the verification region 4.1, and the reflected beam strikes the photodetector means 2.1 of the second receiving group 2 for receiving it in the operating mode.

A third guiding means, such as an optical fiber pigtail, preferably collects the emission from the third emitting diode to combine it in the common optical fiber 1.3.4 by means of the combiner 1.3.3.

The second receiving group 2 further comprises a third demodulation chain at frequency *f*₃ also supplied by the output of the electrical signal *S*₁ of the photodetector means 2.1. In relation to this third chain, the signal *S*₁ is passed through a third band-pass filter included at *f*₃ to improve the signal-to-noise ratio. This signal is introduced in a third mixer where it is multiplied by the reference signal REF3 of the third modulation oscillator at frequency *f*₃. A third low-pass filter is placed at the output of the third mixer, which allows obtaining the complex amplitude *A*₃ by means of the signal *X*₃ and its quadrature *Y*₃. The modulus of the complex amplitude is |*A*₃|²= *X*₃²+ *Y*₃², and the phase is φ₃=atan (*Y*₃/*X*₃).

These signals are introduced in the analog-to-digital converter ADC 3.1 present in the control and processing group 3. Once digitized for processing by any processing unit 3.2, in this example it is possible to compare the modulus of the ratio of these amplitudes |*A*₂|/|*A*₁| with a first reference value RREF1 and the amplitudes |*A*₃|/|*A*₁| with a second reference value RREF2.

As in the preceding example, in this example this first reference value RREF1 is a first discrimination threshold for discriminating between two states of a verification region 4.1 which correspond to the presence or absence of liquid water. In this example, said second reference value RREF2 is a second discrimination threshold for discriminating between two states of a verification region 4.1 which correspond to the presence or absence of ice. Said device therefore allows detecting the presence of water and ice in a verification region of the surface of the roadway 4.1.

Said device can incorporate the various solutions on the signal of the third diode emitter laser, such as the power control system adopted for the preceding example.

The solution provided by means of the embodiments of this device allows for extremely stable and compact constructive configurations which allow the autonomous implementation thereof both in fixed systems and in moving systems, such as vehicles and particularly automobiles, the latter being particularly advantageous.

Based on the preceding embodiments, it can be seen that due to maximum simplification combined with the detection scheme of the optical scheme, it is possible to overcome optical alignments problems and it does not have any moving parts, allowing very high sensitivity.

## Claims

1. A device for detecting a state condition of the surface of the roadway in a specific verification region (4.1), **characterized in that** it comprises
- a first emitting group (1) in turn comprising
● a first laser source (1.1) emitting a beam (5.1) with a wavelength λ₁ in the operating mode,
where this first laser source (1.1) has modulation means (1.1.2) modulating the intensity *I*₁ at a frequency *f*₁ in the operating mode,
the value of the refractive index of the verification region (4.1) at wavelength λ₁ being indistinguishable when the verification region (4.1) is in one state condition or another;
● a second laser source (1.2) emitting a beam (5.2) with a wavelength λ₂ in the operating mode,
where this second laser source (1.2) has modulation means (1.2.2) modulating the intensity *I*₂ at a frequency *f*₂ in the operating mode, where this frequency *f*₂ is different from the frequency *f*₁,
the value of the refractive index of the verification region (4.1) at wavelength λ₂ being different when the verification region (4.1) is in one state condition or another;
- a second receiving group (2) in turn comprising:
● photodetector means (2.1) intended for receiving the reflected radiation (5.3) coming from the first and second laser source (1.1, 1.2) after striking the verification region (4.1) and comprising an output of the electrical signal *S*₁;
● a first demodulation chain (2.2) supplied by the output of the electrical signal *S*₁ from the photodetector means (2.1) and provided with an output of the demodulation signal A₁;
● a second demodulation chain (2.3) also supplied by the output of the electrical signal *S*₁ of the photodetector means (2.1) and provided with an output of the demodulation signal A*₂*;
where the first and second laser sources (1.1, 1.2) of the first emitting group (1) are oriented such that the radiation of the two laser beams (5.1, 5.2) strikes the verification region (4.1), and at least part of the reflected radiation (5.3) strikes the photodetector means (2.1) of the second receiving group (2) in the operating mode; and where the device additionally comprises a measuring module (3) which assesses the magnitudes *A*₂ and *A*₁ in the operating mode and compares their ratios with at least one set of values that reflect the variation of the refractive index in response to a local state condition of the roadway.

2. The device according to claim 1, **characterized in that** the first emitting group (1) has at least a third laser source emitting a beam with a wavelength λ₃ in the operating mode, where this third laser source:
● has modulation means modulating the intensity at a frequency *f*₃ different from the frequencies *f*₁ and *f₂* of the first and second laser sources in the operating mode,
● is oriented such that it strikes the verification region (4.1), and the reflected beam strikes the photodetector means (2.1) of the second receiving group (2) in the operating mode; and
where the second receiving group (2) additionally comprises a third demodulation chain also supplied by the output of the electrical signal *S*₁ of the photodetector means (2.1) and provided with an output of the demodulation signal *A*₃; and where the device allows assessing the ratio between magnitudes *A*₃ and *A*₁ in the operating mode by means of the measuring module.

3. The device according to claim 1 or 2, **characterized in that** the laser sources (1.1, 1.2) as well as the photodetector means (2.1) are located in one and the same support.

4. The device according to any of claims 1 to 3, **characterized in that** it has guiding means or elements (1.3) which conduct the laser beams (5.1, 5.2) from the laser sources (1.1, 1.2) to an emitting point from where the emitting point is oriented towards the verification region (4.1).

5. The device according to any of claims 1 to 4, **characterized in that** at least one collimator (1.3.5) is provided for the collinear emission of beams towards the verification region (4.1).

6. The device according to any of claims 1 to 5, **characterized in that** the photodetector means (2.1) comprise a focusing lens (2.1.1) for focusing the reflected radiation (5.3) in the verification region (4.1).

7. The device according to any of claims 1 to 6, **characterized in that** the photodetector means (2.1) comprise a photodiode (2.1.3).

8. The device according to any of claims 1 to 7, **characterized in that** the photodetector means (2.1) comprise a preamplifier (2.1.4) between the photodiode (2.1.3) and the demodulation chains (2.2, 2.3).

9. The device according to any of claims 1 to 8, **characterized in that** at least one of the demodulators (2.2, 2.3) comprises a mixer (2.2.3, 2.3.3) wherein the electrical signal *S*₁ is introduced in one of the inputs of the mixer (2.2.3, 2.3.3) and the signal of an oscillator (1.1.2, 1.2.2) at one of the modulation frequencies (f₁, f₂) is introduced in another one of the inputs of the mixer (2.2.3, 2.3.3), and the output of this mixer (2.2.3, 2.3.3) is introduced in a low-pass filter (2.2.4, 2.3.4) for detecting the phase-amplitude of the electrical signal *S*₁ in phase with the local oscillator (1.1.2, 1.2.2).

10. The device according to any of claims 1 to 9, **characterized in that** at least one of the demodulation chains (2.2, 2.3) is implemented numerically by means of an analog-to-digital converter, an anti-aliasing filter and a logic device, such as a combination of DSP, microprocessor, microcontroller, DPS, FPGA, or another logic device suitable for detecting the phase-amplitude of the signal of the photodetector means (2.1) at a specific frequency.

11. The device according to any of claims 1 to 10, wherein the power of at least one of the laser sources (1.1, 1.2) is controlled by means of a power control system adjusted by a threshold power value Pᵢ and a power value proportional to the complex amplitude magnitude of |*A*ᵢ| for any of the signals i=1, 2 , 3...n.

12. A detection method for detecting a state condition of the surface of the roadway in a specific verification region (4.1) comprising the steps of:
- providing
a first beam (5.1) with a wavelength λ₁, wherein the value of the refractive index of the verification region (4.1) at wavelength λ₁ is indistinguishable when the verification region (4.1) is in one state condition or another, the intensity *I*₁ of this first beam (5.1) being modulated at a frequency *f*₁; and
a second beam (5.2) with a wavelength λ₂, wherein the value of the refractive index of the verification region (4.1) at wavelength λ₂ is different when the verification region (4.1) is in one state condition or another, the intensity *I*₂ of this second beam (5.2) being modulated at a frequency *f₂* different from the frequency *f*₁; and the radiation of both beams (5.1, 5.2) striking the verification region (4.1);
- detecting the reflected radiation (5.3) in the verification region (4.1), comprising a component of wavelength λ₁ and a component of wavelength λ₂, by means of photodetector means (2.1) transforming this reflected electromagnetic radiation into an electrical signal *S*₁;
- demodulating the electrical signal *S*₁ at frequencies *f*₁ and *f*₂ providing the values of a first complex amplitude *A*₁ at a frequency *f*₁ and of a second complex amplitude *A*₂ at a frequency *f*₂;
- comparing these values of the complex amplitude *A*₁, *A₂* with at least one complex amplitude reference value reflecting the variation of the refractive index at wavelength λ₂ when the verification region (4.1) is in said state condition.

13. The method according to claim 12, wherein the state condition is verified if the ratio between the moduli of the second complex amplitude |*A*₂| and of the first complex amplitude |*A*₁| is greater than a reference value RREF.
